# EUROPEAN PATENT SPECIFICATION

(11) **EP 2 179 830 B1**
(45) Date of publication and mention of the grant of the patent: **03.12.2014**
(21) Application number: 08018362.7
(22) Date of filing: 21.10.2008
(51) Int. Cl.: B29C 31/10, B29C 31/02, B29B 7/42, B29C 45/46, B29C 45/74, B29C 47/00, B29C 47/78, B29K 67/00, B29K 77/00, B29K 105/00, B29B 7/60, B29C 45/18, B29C 47/10, B29C 45/54

(54) **Method of feeding an apparatus simultaneously with at least two streams of thermoplastic materials, and feeding device for implementing the method**
Verfahren zum gleichzeitigen Zuführen von mindestens zwei Strömen von thermoplastischen Materialien zu einer Vorrichtung und Zufuhrvorrichtung zum Durchführen des Verfahrens
Procédé d'alimentation d'un appareil simultanément avec au moins deux flux de matériaux thermoplastiques, et dispositif d'alimentation pour mettre en oeuvre le procédé

(43) Date of publication of application: 28.04.2010
(73) Proprietor: LA SEDA DE BARCELONA S.A., 08820 El Prat De Llobregat, Barcelona (ES)
(72) Inventor: Verheyen, Luc, 2960 Brecht (BE)
(74) Representative: Matkowska, Franck

(56) References cited:
- EP-A- 1 623 812
- WO-A-86/00561
- JP-A- 4 316 823
- JP-A- 59 045 109
- US-A- 3 871 629

## Description

### Field of the Invention

The present invention relates to a novel improvement for feeding an apparatus simultaneously with at least two streams of solid-state thermoplastic materials, i.e. notably thermoplastic materials in the form of pellets, chips, small particles, powder. The apparatus can be any kind of apparatus that can be used in the plastic field for processing thermoplastic materials, and more particularly any apparatus for melting and blending the thermoplastic materials, like for example an apparatus comprising an extrusion screw.

### Prior art

In the field of plastic processing and more especially in the field of plastic packaging, extrusion screws are widely used for melting and blending thermoplastic materials. The thermoplastic material in solid-state, i.e. typically thermoplastic materials in the form of pellets, chips, small particles, powder, is first dried in a hopper at a predetermined temperature, and is then fed to the inlet of the screw at a temperature around this drying temperature. The drying temperature is lower than the melting temperature of the thermoplastic material. Typically, for PET (Polyethylene Terephtalate) pellets, having a melting temperature around 260°, the drying temperature is generally set to approximately 160°C. For polyamide pellets having a melting temperature about 250°C, the drying temperature is generally set to not more than 90°C and typically between 70°C and 90°C, in order to avoid a thermal degradation of the polyamide.

It is also well-known in the art to coat thermoplastic pellets or the like with one additive that is for example a lubricant in order to improve the process ability of the pellets and in particular in order to obtain pellets having a better extrudability. The use of lubricant for coating pellets is for example disclosed in the following patent publications: US 5, 006, 368 ; US 5,763, 084.The lubricants used for coating thermoplastic pellets are for example metal stearate such as aluminium stearate, calcium stearate, zinc stearate, rhodium stearate and magnesium stearate.

It is also known to coat thermoplastic pellets or the like with one additive that is selected in order to obtain a thermoplastic material exhibiting improved gas-barrier properties, and in particular better oxygen-scavenging properties. For example, it is known to coat polyamide pellets with an additive that is a transition metal catalyst selected from the group: cobalt stearate, aluminium stearate, calcium stearate, zinc stearate, magnesium stearate, rhodium stearate, manganese stearate, copper stearate, iron stearate.

Generally, the additives that are used as coating have a low melting temperature, and in particular a melting temperature that is lower than the melting temperature of pellets. For example, the melting temperature of cobalt stearate coating or the like is typically about 70°-75°C.

When a screw is used for melting and blending together at least two different thermoplastic materials, like for example PET pellets with polyamide pellets coated with cobalt stearate, and in case the thermoplastic material of one stream is being fed to the inlet of the screw at a temperature that is higher than the melting temperature of the surface of thermoplastic material of the other stream, the surface of the thermoplastic material of lower melting temperature starts to melt before reaching the screw inlet. Such a premature melting of the thermoplastic material of lower melting temperature is detrimental and involves several drawbacks. The melted thermoplastic material sticks on hot surfaces of the feeding device, which obliges to carry out a daily cleaning of the feeding device and of the screw inlet. Furthermore, in some cases, the sticky thermoplastic material can detrimentally partially or totally block the screw inlet.

A method having the characteristics mentioned in the preamble of claim 1 and an apparatus having the characteristics mentioned in the preamble of claim 12 is disclosed in the Japanese patent application JP-A-4316823.

### Objective of the invention

One main objective of the invention is to propose a novel technical solution that improves the feeding of an apparatus, and for example the feeding of a screw for melting and blending thermoplastic materials, with at least two different streams of solid-state thermoplastic materials, i.e. thermoplastic materials in the form of pellets, chips, small particles, powder.

A more particular objective of the invention is propose a novel technical solution that improves the feeding of an apparatus with at least two different streams of solid-state thermoplastic materials, wherein the solid-state thermoplastic material of one stream is fed at a temperature that is higher than the melting temperature of the solid-state thermoplastic material of the other stream. In particular, this novel technical solution solves the aforesaid drawbacks caused by the stickiness of the thermoplastic material of lower melting point.

### Summary of the invention

At least the aforesaid main objective is achieved by the method of claim 1.

The wording "solid-state" is used therein for designating thermoplastic material in solid state and in the form of pellets, chips, small particles, powder or the like.

For practising this method of feeding, the melting temperature (MTa) of the said first thermoplastic material (A) is higher than the melting temperature (MTb) of the said second thermoplastic material (B) ; the feeding temperature of the thermoplastic material (A) of said first stream (ST1) is lower than the melting temperature (MTa) of the said first thermoplastic material (A), but is higher than the melting temperature (MTb) of the said second thermoplastic material (B) ; the feeding pipe is continuously cooled for maintaining the temperature of the said second thermoplastic material (B) of said second stream (ST2) inside this feeding pipe below the melting temperature (MTb) of the second thermoplastic material (B).

Within the scope of the invention the "melting temperature" is in practise the temperature at which the surface of the solid-state thermoplastic material starts to melt, and the thermoplastic material becomes sticky.

Within the scope of the invention, one stream (ST1 or ST2) of thermoplastic material can be made only of one type of polymer. In this case, the "melting temperature of the thermoplastic material of one stream" means the melting temperature of the polymer of the thermoplastic material A or B.

Within the scope of the invention, one stream (ST1 or ST2) of thermoplastic material can also be made of thermoplastic pellets or the like coated with one additive. In this case, the "melting temperature of the thermoplastic material of one stream" will be the lowest melting temperature among the melting temperature of the thermoplastic pellets and the melting temperature of the coating. Generally, the melting temperature of the coating is lower than the melting temperature of the polymer constituting the thermoplastic pellets.

Within the scope of the invention, one stream (ST1 or ST2) of thermoplastic material can be made also of a dry blend of several polymers having different melting temperatures. In this case, the "melting temperature of the thermoplastic material of one stream" will be the melting temperature of the polymer having the lowest melting temperature.

The invention further relates to a first and second solid-state thermoplastic materials and a device, as defined in claims 12, for feeding an apparatus by gravity simultaneously with at least two streams (ST1, ST2) of said solid-state thermoplastic materials (A, B).

The invention further relates to an installation as defined in claim 23.

### Brief description of the drawings

Other characteristics and advantages of the invention will appear more clearly on reading the following description a several embodiments of the invention, which description is given by way of non-limiting example and with reference to the accompanying drawings, in which:
- Figure 1 shows an example of installation of the invention for manufacturing injection molded plastic preforms,
- Figure 2 is a sideview of a first variant of a feeding device of the invention,
- Figure 3 is a side view of the inner cooled pipe of the feeding device of figure 2,
- Figure 4 is a sideview of a second variant of a feeding device of the invention,
- Figure 5 a sideview of a third variant of a feeding device of the invention,
- Figure 6 is sideview of fourth variant of a feeding device of the invention.

### Detailed description

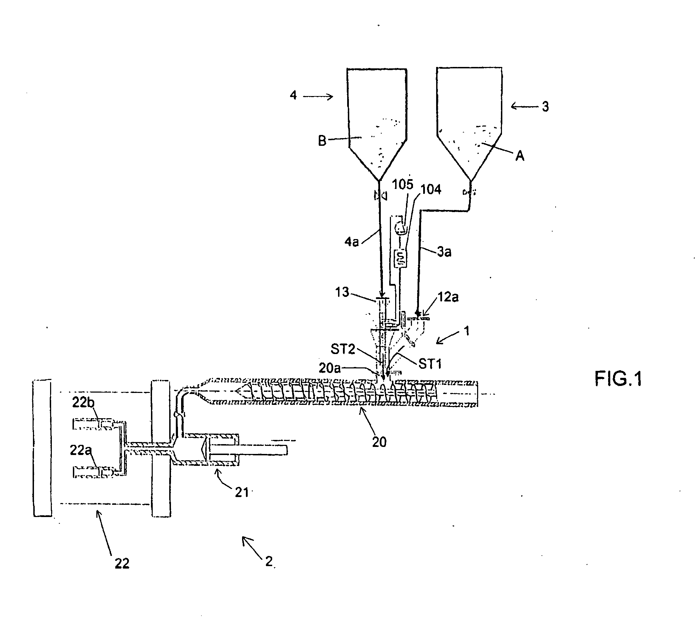

An installation for manufacturing plastic preforms is shown on figure 1. This installation comprises a standard injection machine 2 comprising a screw extruder 20, an injection mould 22 having two injection cavities 22a, 22b, and an injection piston 21 for injecting into the cavities 22a, 22b the polymer blend delivered by the screw extruder 20. This injection machine 2 is well-known in the art and will not be described in details. In this particular example, the injection mould 22 comprises two injection cavities 22a, 22b and can thus be used for manufacturing two plastic preforms in parallel at each injection cycle. Obviously, the number of injection cavities is not a limitation of the invention.

The screw extruder 2 is fitted with a feeding device 1 of the invention. In this particular embodiment of figure 1, this feeding device 1 is used for feeding the screw extruder 2 simultaneously with two streams ST1 and ST2 of different solid-state thermoplastic materials A and B (pellets, chips, small particles, powder or the like).

It has to be outlined that the scope of the invention is not limited to the feeding of a screw extruder 20, but the feeding device 1 of the invention can be advantageously used for feeding any known apparatus for processing thermoplastic materials.

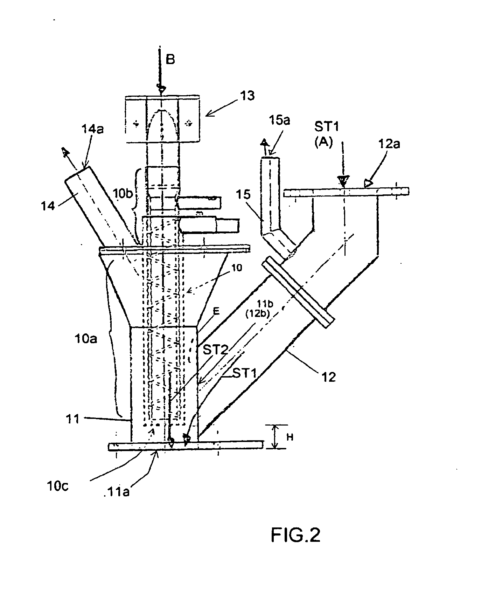

In reference to figure 2, the feeding device 1 comprises a vertical inner cooled feeding pipe 10 and a main vertical outer feeding pipe 11. The outer feeding pipe 11 comprises a bottom outlet opening 11 a for delivering by gravity the streams ST1 and ST2 of thermoplastic materials outside the pipe. Said bottom outlet opening 11a is connected to the inlet 20a (figure 1) of the screw extruder 20.

The outer feeding pipe 11 comprises in its lower part a first lateral inlet opening 11 b for the introduction of the first stream ST1 of thermoplastic material A inside the outer feeding pipe 11. For transporting by gravity the first stream ST1 of thermoplastic material A down to this lateral inlet opening 11 b, the outer feeding pipe 11 is fitted with a lateral feeding pipe 12 that forms a Y with the outer pipe 11. The lateral pipe 12 is for example welded with the outer feeding pipe 11. This feeding lateral pipe 12 comprises a top inlet opening 12a and a bottom outlet opening 12b.

The top inlet opening 12a is used for the introduction by gravity of the first stream ST1 of thermoplastic material A inside the lateral pipe 12. To this end, in the installation of figure 1, this top opening 12a is connected to the outlet of a standard drying equipment 3 via a transporting duct 3a. The drying equipment 3 is knowingly used for heating and drying for example by means of hot air the solid-state thermoplastic material A. The solid-state thermoplastic material A is thus stored in bulk in the drying equipment 3 at a known temperature Ta that is below the known melting temperature MTa of the solid-state thermoplastic material A. In operation, the stream ST1 of hot thermoplastic material A flows by gravity inside the lateral feeding pipe 12, and penetrates inside the outer pipe 11 via the lateral inlet opening 11 b of the outer pipe 11.

In reference to figure 2, the inner cooled pipe 10 is mounted partially inside the outer feeding pipe 11. More especially, a bottom part 10a of the cooled inner feeding pipe 10 is mounted inside the outer feeding pipe 11, and the remaining top part 10b of the cooled pipe 10 is protruding outside the outer feeding pipe 11.

This top part 10b of the cooled pipe 10 is fitted with a standard dosing unit 13 for dosing the stream ST2 of solid-state thermoplastic material B at the entry of the cooled inner pipe 10. Referring to figure 1, this dosing unit 13 is connected to a standard drying equipment 4 via a transporting duct 4a. The drying equipment 4 is knowingly used for heating and drying for example by means of hot air the solid-state thermoplastic material B. The solid-state thermoplastic material B is thus stored in bulk in the drying equipment 4 at a known temperature Tb that is below the known melting temperature MTb of the solid-state thermoplastic material B.

The inner diameter of the outer feeding pipe 11 is larger than the outer diameter of the inner cooled pipe 10, in such a way that a space E is provided between the outer feeding pipe 11 and the inner cooled feeding pipe 10, said space E being wide enough for enabling the flow under the effect of gravity of the thermoplastic material A between the two pipes. As shown in the particular example of figure 2, the two pipes 10 and 11 are preferably substantially coaxial. It is however not mandatory for practising the invention that the two pipes 10 and 11 are coaxial.

The cooled inner pipe 10 comprises a bottom outlet opening 10c (figure 2) that forms an outlet for the stream ST2 of thermoplastic material B. In the particular example of figure 1, this bottom outlet opening 10c is located inside the outer feeding pipe 11, at the level of the lateral inlet opening 11b of the outer pipe 11, and near the bottom outlet opening 11a of the outer feeding pipe11. One skilled in the art will set the height H between this bottom outlet opening 10c of the inner cooled pipe 10 and the bottom outlet opening 11a of the outer pipe 11, in one hand in order to have this distance H as small as possible, but in the other hand in order to have sufficient space between the two bottom openings 10c and 11 a of the pipes for allowing the streams ST1 and ST2 of thermoplastic material A and B to flow into the inlet 20a of the screw extruder 2, without blocking the said inlet with the thermoplastic materials.

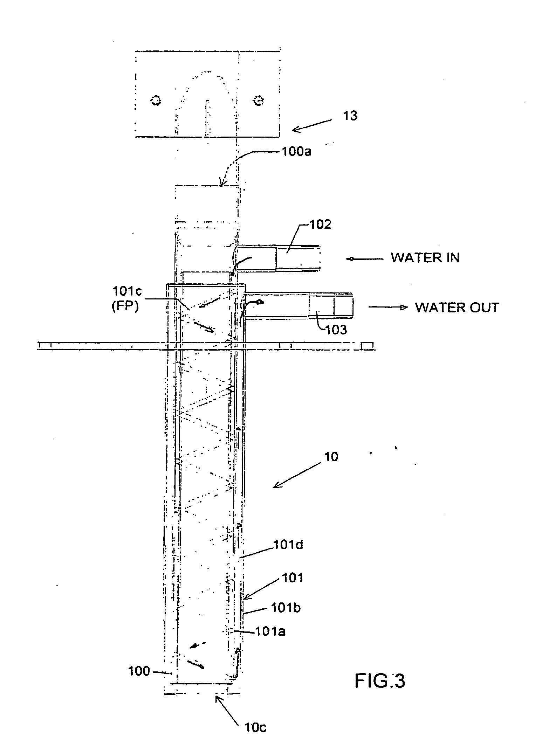

In reference to figure 3, the inner cooled pipe 10 comprises a pipe 100 having a top inlet opening 100a connected to the aforesaid dosing unit 13. This pipe 100 is used for transporting by gravity the stream ST1 of solid thermoplastic material B that is fed by the dosing unit 13 inside this pipe 100 via the top inlet opening 100a. This pipe 100 is equipped with cooling means for continuously cooling the wall of the pipe 100. These cooling means comprises a jacket 101 that surrounds the pipe 100. This jacket 100 comprises two cylindrical and coaxial walls 101 a, 101b. A helical groove 101c is made in the inner face of the inner wall 101a. This groove 101c forms with the outer face of the pipe 100 a helical path FP for the circulation of a cooling fluid in contact with the pipe 100. The walls 101 a and 101 b form an annular chamber 101d that is closed at its bottom end. The bottom end of the helical fluid path FP is in fluid communication with the said chamber 101d. The cooling means further comprise an inlet duct 102 for the introduction of a cooling fluid inside the helical fluid path FP, and an outlet duct 103 for the exhaust of the fluid from the chamber 101d. In reference to figure 1, these ducts 102, 103 are connected to fluid cooling means 104 and to a pump 105, in such a way that in operation the fluid in the chamber 101d (for example water) is continuously sucked by the pump 105, passes through and is cooled by the cooling means 104, and is continuously reintroduced in the helical fluid path FP after cooling. A cooled fluid is thus continuously circulating in contact with the wall of pipe 100, and the wall of pipe 100 is thus maintained below a predetermined temperature Tc that depends of the temperature of the cooling fluid in the fluid path FP.

In the particular embodiment of figure 2, the feeding device 1 also comprises two exhaust pipes 14, 15.

The exhaust pipe 14 is positioned in the upper part of the outer pipe 11 and is provided for evacuating dust material or the like that is flying inside the outer pipe 11. To this end, the top outlet opening 14a exhaust pipe 14 is connected to suction means (not shown) for sucking and evacuating dust materials outside the outer pipe, through the exhaust pipe 14.

The exhaust pipe 15 is connected to the lateral feeding pipe 12, and is used for evacuating into the ambient atmosphere, via its top outlet opening 15a, hot air contained in this lateral pipe 12. In another variant, the top outlet opening could be connected to suction means.

In operation of the installation of figure 1, a stream ST1 of hot solid-state thermoplastic material A (pellets or the like) is fed from the drying equipment 3 inside the outer pipe 11, via the lateral feeding pipe 12. The solid-state thermoplastic material A of stream ST1 is at a temperature Ta that is below the melting temperature MTa of the thermoplastic material A.

Simultaneously solid-state thermoplastic material B (pellets or the like) is fed by gravity from the drying equipment 4 to the dosing unit 13, and a stream ST2 of solid-state thermoplastic material B is fed from the dosing unit 13 inside the pipe 100 of the inner cooled pipe 10. The temperature T2 of the solid-state thermoplastic material B of stream ST2 at the output of the dosing unit 13 (i.e. at the entry of the cooled inner pipe 10) is below the melting temperature MTb of the thermoplastic material B

This stream ST2 of solid-state thermoplastic material B falls by gravity inside this pipe 100 down to the bottom outlet opening 10c of the cooled pipe 10.

The cooling means of the inner cooled pipe 10 are set in order to maintain the temperature of the thermoplastic material B inside the pipe 100 at a temperature below the melting temperature MTb of the thermoplastic material B. Thanks to the cooled inner pipe 10, the solid-state thermoplastic material A of stream ST1 can be at a temperature T1 inside the outer pipe 11 that is above the melting temperature MTb of the thermoplastic material B of the stream ST2, while the said thermoplastic material B of the stream ST2 is dropped above the inlet 20a of the screw extruder 2a, and near this inlet 20a, at a temperature that is still kept below the melting temperature MTb of the material. A melting of thermoplastic material B of the stream ST2 is thus avoided inside the inner cooled pipe 10 and there is advantageously no risk that the thermoplastic material B of the stream ST2 sticks against the walls of the feeding device 1.

The two streams ST1 and ST2 of thermoplastic materials A and B at two different temperatures are introduced together inside the screw extruder 20 via the same inlet 20a of the screw extruder 20a. These two materials A and B are heated and blended in the screw extruder 20 and injected in the mould cavities 22a, 22b for making injection moulded plastic pieces (plastic preforms in this particular embodiment).

During the feeding operation, light dust materials that might fly inside the top part of the outer pipe 11 are continuously sucked and evacuated outside the pipe 11, via the exhaust opening 14. Hot air inside the lateral feeding pipe 12 is also evacuated via the exhaust pipe 5.

### Examples of thermoplastic materials A and B

By way of example only, the feeding device 1 of the installation of figure 1 was used for feeding the screw extruder 20 with a stream ST1 of aromatic polyester pellets A, and more particularly with a stream ST1 of pellets made of homopolymer of PET (Polyethylene Terephthalate), and simultaneously with a stream ST2 of coated polyamide pellets B.

The melting temperature MTa of the PET pellets A was around 260°C. The temperature Ta of the PET pellets A at the output of the drying equipment 3 and at the entry of the outer pipe 11 of the feeding device 1 was around 160°C.

The pellets B of stream ST2 were pellets made of polyamide, and more particularly made of MXD6 (copolymer of m-xylylenediamine and adipic acid), coated with an additive made of Cobalt stearate. The melting temperature MTB of the pellets B was the melting temperature of the Cobalt stearate coating and was about 75°C.

The temperature Tb of the pellets B at the output of the drying equipment 4 and at the entry of the inner pipe 10 of the feeding device 1 was between about 70°C. The pipe 100 was continuously cooled in order to lower and maintain the temperature of pellets B inside the pipe 100 at a temperature between 15°C and 30°C.

The invention is however not limited to the aforesaid particular thermoplastic materials A and B, but can be practised with any known thermoplastic materials. In particular, the stream ST1 or ST2 can be made of a dry blend of pellets made of different polymers. The solid-state material A can be also made of pellets coated with an additive. In return, the solid-state material A are not necessarily made of pellets coated with an additive.

Among the additives that can be used as a coating, one can used for example any transition metal salt that promotes the oxidation of the polyamide and improves the oxygen scavenging properties thereof. This transition metal salt can be selected from the group: cobalt stearate, rhodium, stearate, manganese stearate, copper stearate, iron stearate. Among the additives that can be used as a coating, one can also used for example any lubricant that improves the extrudability of the thermoplastic pellets on which it is applied, and is for example a lubricant selected from the group cobalt stearate, aluminium stearate, calcium stearate, zinc stearate, magnesium stearate, rhodium stearate, manganese stearate, copper stearate, iron stearate.

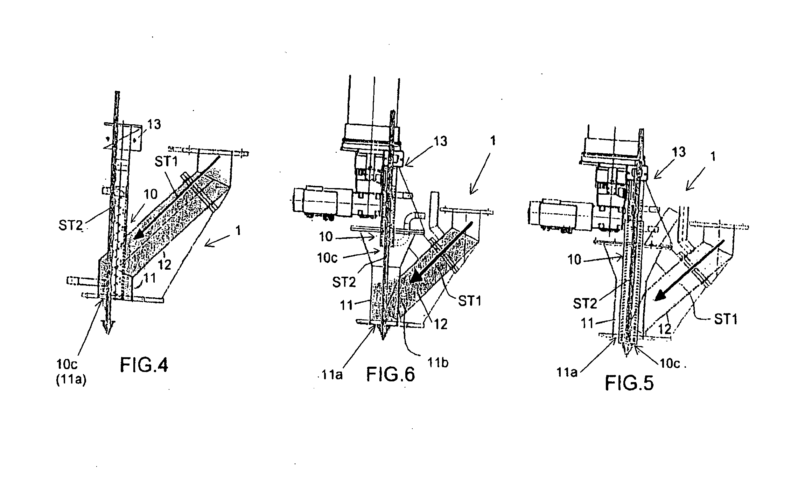

Figure 4 shows a second variant of a feeding device 1 of the invention, wherein the bottom outlet opening 10c of the inner cooled pipe 10 is positioned at the same level than the bottom outlet opening 11a of the outer pipe 11. In use, when this feeding device 1 is mounted on the inlet 20a of an apparatus 20, the cooled feeding pipe 10 is used for transporting the second stream ST2 of thermoplastic material B down to the inlet 20a of the apparatus.

Figure 5 shows a third variant of a feeding device 1 of the invention, wherein the bottom outlet opening 10c of the inner cooled pipe 10 is positioned outside the outer pipe 11 and below the bottom outlet opening 11a of the outer pipe 11. In use, when this feeding device 1 is mounted on the inlet 20a of an apparatus 20, the cooled feeding pipe 10 is used for transporting the second stream ST2 of thermoplastic material B inside the apparatus 2, through the said inlet 20a of the apparatus.

Figure 6 shows a fourth variant of a feeding device 1 of the invention, wherein the bottom outlet opening 10c of the inner cooled pipe 10 is positioned above the bottom outlet opening 11 a of the outer pipe 11, but also at a level above the inlet opening 11 b of the outer feeding pipe 11. In use, and contrast with other variants of figure 2, 4 or 5, the lower part of the cooled feeding pipe 10 is not positioned inside the first stream ST1of first thermoplastic material A. In use, the thermoplastic material B of stream ST2 is thus dropped above the stream ST1 of thermoplastic material A.

## Claims

1. A method of feeding an apparatus (2) with at least a first stream (ST1) of a first solid-state thermoplastic material (A) and simultaneously with at least a second stream (ST2) of second solid-state thermoplastic material (B), wherein the melting temperature (MTa) of the said first thermoplastic material (A) is higher than the melting temperature (MTb) of the said second thermoplastic material (B), wherein the apparatus is fed by gravity via an inlet (20a) with the said first stream (ST1) of thermoplastic material (A), **characterized in that** a feeding pipe (10) is used for simultaneously feeding the apparatus by gravity via the same inlet (20a) with said second stream (ST2) of thermoplastic material (B), and **in that** the feeding temperature (Ta) of the thermoplastic material (A) of said first stream (ST1) is lower than the melting temperature (MTa) of the said first thermoplastic material (A), but is higher than the melting temperature (MTb) of the said second thermoplastic material (B), and the feeding pipe (10) is continuously cooled for maintaining the temperature of the said second thermoplastic material (B) of said second stream (ST2) inside this feeding pipe (10) below the melting temperature (MTb) of the second thermoplastic material (B).

2. The method of claim 1 wherein at least a lower part of the cooled feeding pipe (10) is positioned inside the first stream (ST1) of first thermoplastic material (A).

3. The method of any one of claims 1 to 2, wherein the cooled feeding pipe (10) is used for transporting said second stream (ST2) of second thermoplastic material (B) above and near the inlet (20a) of the apparatus

4. The method of any one of claims 1 to 2, wherein the cooled feeding pipe (10) is used for transporting said second stream (ST2) of second thermoplastic material (B) down to the inlet (20a) of the apparatus.

5. The method of any one of claims 1 to 2, wherein the cooled feeding pipe (10) is used for transporting said second stream (ST2) of second thermoplastic material (B) inside the apparatus (2), through the said inlet (20a) of the apparatus.

6. The method of any one of claims 1 to 5, wherein an outer feeding pipe (11) is used for transporting said first stream (ST1) of first thermoplastic material (A), wherein at least a part of the first cooled feeding pipe (10) is positioned inside the outer feeding pipe (11), and wherein the first stream (ST1) of first thermoplastic material (A) is flowing within the space (E) between the two pipes.

7. The method of any one of claims 1 to 6, wherein the apparatus (2) comprises a screw for blending, and preferably for melt blending, the at least two thermoplastic materials (A, B).

8. The method of any one of claims 1 to 7, wherein the first thermoplastic material (A) comprises a homo or copolymer of aromatic polyester, and the second material (B) comprises a homo or copolymer of polyamide.

9. The method of claim 8, wherein the second thermoplastic material (B) comprises polyamide pellets coated with an additive.

10. The method of claim 9, wherein the additive is selected from the group : cobalt stearate, aluminium stearate, calcium stearate, zinc stearate, magnesium stearate, rhodium stearate, manganese stearate, copper stearate, iron stearate.

11. The method of any one of claims 1 to 10, wherein dust material flying inside the outer pipe (11) is continuously sucked and evacuated outside the outer pipe.

12. A device (1) for feeding an apparatus by gravity with at least first stream (ST1) of a first solid-state thermoplastic materials (A) and simultaneously with at least a second stream of a second solid-state thermoplastic material (B), the melting temperature (MTa) of the said first thermoplastic material (A) being higher than the melting temperature (MTb) of the said second thermoplastic material (B), **characterized in that** said device (1) comprising an inner cooled feeding pipe (10), and an outer feeding pipe (11), wherein at least a lower part (10a) of the said inner cooled feeding pipe (10) is positioned inside the outer feeding pipe (11), with a flowing space (E) between the two pipes (10, 11) for allowing the flow of one stream (ST1) of thermoplastic material (A), wherein the outer feeding pipe (11) comprises an inlet opening (11b) for the introduction of the first stream (ST1) of thermoplastic material (A) at a first feeding temperature (Ta) inside the said flowing space (E) and a bottom outlet opening for dropping the first stream (ST1) of thermoplastic material (A) outside the outer pipe, and wherein the inner cooled feeding pipe (10) comprises an inlet opening (100a) for the introduction of the other stream (ST2) of thermoplastic material (B) at a second feeding temperature (Tb) inside the inner cooled pipe (10) and a bottom outlet opening (10c) for dropping the second stream (ST2) of thermoplastic material (B) outside the inner pipe (10).

13. The device of claim 12, wherein the bottom outlet opening (10c) of the inner cooled pipe (10) is positioned inside the outer pipe (11) and above the bottom outlet opening (11a) of the outer pipe (11).

14. The device of claim 12 wherein the bottom outlet opening (10c) of the inner cooled pipe (10) is positioned at the same level than the bottom outlet opening (11a) of the outer pipe (11).

15. The device of claim 12 wherein the bottom outlet opening (10c) of the inner cooled pipe (10) is positioned outside the outer pipe (11) and below the bottom outlet opening (11a) of the outer pipe (11).

16. The device of any one of claims 12 to 15, wherein the inlet opening (11b) of the outlet pipe (11) for the introduction of the first stream (ST1) of thermoplastic material (A) inside the said flowing space (E) is a lateral opening made in the wall of the pipe.

17. The device of claim 16, further comprising a lateral feeding pipe (12) forming a Y with the outer feeding pipe (11) and suitable for transporting by gravity the first stream (ST1) of thermoplastic material (A) down to the lateral inlet opening (11b) of the outer pipe (11).

18. The device of claim 17, further comprising an exhaust pipe (15) for evacuating hot air outside the lateral feeding pipe (12).

19. The device of any one of claims 12 to 18, wherein the inner cooled pipe (10) comprises a pipe (100) for transporting by gravity the second stream (ST2) of thermoplastic material (B) and cooling means (101, 102, 103, 104, 105) for continuously cooling said pipe (100).

20. The device of claim 19, wherein the cooling means (101, 102, 103, 104, 105) are suitable for making a cooled fluid to continuously circulate in contact with the outer surface of the pipe (100).

21. The device of any one of claims 12 to 20, further comprising a dosing unit (13) for dosing the thermoplastic material (B) at the entry of the cooled inner pipe (10).

22. The device of any one of claims 12 to 21, further comprising an exhaust pipe (14) for evacuating dust material outside the outer pipe (11).

23. An installation comprising an apparatus (2) for processing at least two thermoplastic materials (A, B), said apparatus comprising an inlet (20a) that is fitted with a device (1) of any one of claims 12 to 22 for feeding the apparatus via said inlet and by gravity simultaneously with at least two streams (ST1, ST2) of thermoplastic materials (A, B).

24. The installation of claim 23, wherein the apparatus comprise a screw for blending, and preferably for melt blending, the at least two thermoplastic materials (A, B).

25. The installation of claim 24, further comprising an injection mould (22) for manufacturing injection moulded plastic pieces.

26. Use of the installation of any one of claims 23 to 25 for manufacturing injection moulded plastic pieces, and more particularly preforms, from a blend made of at least the two different thermoplastic materials (A, B).

27. Use of the installation of any one of claim 23 to 25 for blending and preferably for melt blending, at least two thermoplastic materials (A, B).

28. The use of claim 27, wherein the first thermoplastic material (A) comprises a homo or copolymer of aromatic polyester, and the second material (B) comprises a homo or copolymer of polyamide.

29. The use of claim 27 or 28, wherein the second thermoplastic material (B) comprises polyamide pallets coated with an additive.

30. The use of claim 29, wherein the additive is selected from the group : cobalt stearate, aluminium stearate, calcium stearate, zinc stearate, magnesium stearate, rhodium stearate, manganese stearate, copper stearate, iron stearate.

## Patentansprüche

1. Verfahren zum Speisen einer Vorrichtung (2) mit zumindest einem ersten Strom (ST1) eines Feststoff-Thermoplasten (solid-state thermoplastic material; A) und gleichzeitig mit einem zweiten Strom (ST2) eines zweiten Feststoff-Thermoplasten (B), wobei die Schmelztemperatur (MTa) des ersten Thermoplasten (A) höher ist, als die Schmelztemperatur (MTb) des zweiten Thermoplasten (B), wobei die Vorrichtung über Schwerkraft durch einen Einlass (20a) gespeist wird, und zwar mit dem ersten Strom (ST1) des Thermoplasten als thermoplastisches Material (A), **dadurch gekennzeichnet, dass** ein Speiserohr oder eine Speiseleitung (10) verwendet wird, zum gleichzeitigen Speisen der Vorrichtung per Schwerkraft über den gleichen Einlass (20a) dem zweiten Strom (ST2) des Thermoplasten (B), und dass die Speisetemperatur (Ta) des Thermoplasten (A) des ersten Stroms (ST1) kleiner oder geringer ist, als die Schmelztemperatur (MTa) des ersten Thermoplasten (A), aber höher ist als die Schmelztemperatur (MTb) des zweiten Thermoplasten (B) und die Speiseleitung (10) kontinuierlich gekühlt wird, wobei die Temperatur des zweiten Thermoplasten (B) des zweiten Stroms (ST2) innerhalb dieser Speiseleitung (10) aufrechterhalten wird, und zwar unter der Schmelztemperatur (MTb) des zweiten Thermoplasten (B).

2. Verfahren nach Anspruch 1, wobei zumindest ein unterer Abschnitt der gekühlten Speiseleitung (10) innerhalb des ersten Stroms (ST1) des ersten Thermoplasten (A) liegt.

3. Verfahren nach einem der Ansprüche 1 oder 2, wobei die gekühlte Speiseleitung (10) zum Transportieren des zweiten Stroms (ST2) des zweiten Thermoplasten (B) oberhalb und nahe dem Einlass (20a) der Vorrichtung verwendet wird.

4. Verfahren nach einem der Ansprüche 1 oder 2, wobei die gekühlte Speiseleitung (10) zum Fördern oder Transportieren des zweiten Stroms (ST2) des zweiten Thermoplasten (B) bis herab zum Einlass (20a) der Vorrichtung verwendet wird.

5. Verfahren nach einem der Ansprüche 1 oder 2, wobei die gekühlte Speiseleitung (10) zum Transportieren oder Fördern des zweiten Stroms (ST2) des zweiten Thermoplasten (B) innerhalb oder in die Vorrichtung (20) verwendet wird, durch den Einlass (20a) der Vorrichtung.

6. Verfahren nach einem der Ansprüche 1 bis 5, wobei eine äußere Speiseleitung oder ein äußeres Speiserohr (11) zum Transportieren des ersten Stroms (ST1) des ersten Thermoplasten (A) verwendet wird, wobei zumindest ein Abschnitt der ersten gekühlten Speiseleitung (10) innerhalb der äußeren Speiseleitung (11) gelegen ist, und wobei der erste Strom (ST1) des ersten Thermoplasten (A) in dem Raum (E) zwischen den beiden Rohren fließt oder geführt wird.

7. Verfahren nach einem der Ansprüche 1 bis 6, wobei die Vorrichtung (2) eine Schraube zum Mischen und bevorzugt zum Schmelzmischen der zumindest zwei Thermoplasten (A,B) aufweist.

8. Verfahren nach einem der Ansprüche 1 bis 7, wobei der erste Thermoplast (A) ein Homo- oder Copolymer eines aromatischen Polyesters aufweist oder beinhaltet, und das zweite Material (B) ein Homo- oder Copolymer eines Polyamids aufweist oder beinhaltet.

9. Verfahren nach Anspruch 8, wobei der zweiteThermoplast (B) Polyamid-Pellets, die mit einem Additiv beschichtet sind, aufweist oder beinhaltet.

10. Verfahren nach Anspruch 9, wobei das Additiv ausgewählt ist aus der Gruppe: Kobalt-Stearat, Aluminium-Stearat, Calcium-Stearat, Zink-Stearat, MagnesiumStearat, Rhodium-Stearat, Mangan-Stearat, Kupfer-Stearat und Eisen-Stearat.

11. Verfahren nach einem der Ansprüche 1 bis 10, wobei Staubmaterial, welches innerhalb des äußeren Rohrs (11) fließt oder bewegt wird, kontinuierlich abgesaugt und außerhalb des äußeren Rohrs evakuiert wird.

12. Einrichtung (1) zum Speisen einer Vorrichtung per Schwerkraft mit zumindest einem ersten Strom (ST1) eines ersten Feststoff-Thermoplasten (A) und gleichzeitig mit zumindest einem zweiten Strom eines zweiten Feststoff-Thermoplasten (B), wobei die Schmelztemperatur (MTa) des ersten Thermoplasten (A) höher ist, als die Schmelztemperatur (MTb) des zweiten Thermoplasten (B), **dadurch gekennzeichnet, dass** die Einrichtung (1) ein inneres, gekühltes Speiserohr (10) und ein äußeres Speiserohr (11) aufweist, wobei zumindest ein unterer Abschnitt (10a) der inneren, gekühlten Speiseleitung (10) innerhalb der äußeren Speiseleitung (11) angeordnet ist, mit einem Speiseraum (E) zwischen den beiden Rohren (10,11), so dass ein Strom (ST1) des Thermoplasten (A) fließen kann, wobei die äußere Speiseleitung (11) eine Einlassöffnung (11b) für das Einführen des ersten Stroms (ST1) des Thermoplasten (A) mit einer ersten Speisetemperatur (Ta) innerhalb des Speiseraums (E) aufweist, und eine untere Auslassöffnung zum Auswerfen oder Abgeben des ersten Stroms (ST1) des Thermoplasten (A) außerhalb des äußeren Rohrs aufweist, und wobei die innere, gekühlte Förderleitung (10) eine Einlassöffnung (100a) zum Einführen des anderen Stroms (ST2) des Thermoplasten (B) bei einer zweiten Fördertemperatur (Tb) innerhalb des inneren, gekühlten Rohres (10) aufweist, und eine untere Auslassöffnung (10c) zum Auswerfen oder Abgeben des zweiten Stroms (ST2) des Thermoplasten (B) außerhalb des inneren Rohres (10) aufweist.

13. Einrichtung nach Anspruch 12, wobei die untere Auslassöffnung (10c) des inneren, gekühlten Rohres (10) innerhalb des äußeren Rohres (11) gelegen ist und oberhalb der unteren Auslassöffnung (11a) des äußeren Rohres (11).

14. Einrichtung nach Anspruch 12, wobei die untere Auslassöffnung (10c) des inneren, gekühlten Rohres (10) auf einer gleichen Höhenlage gelegen ist, wie die untere Auslassöffnung (11a) des äußeren Rohres (11).

15. Einrichtung nach Anspruch 12, wobei die untere Auslassöffnung (10c) des inneren, gekühlten Rohres (10) außerhalb des äußeren Rohres (11) liegt und unterhalb der unteren Auslassöffnung (11a) des äußeren Rohres (11).

16. Einrichtung nach einem der Ansprüche 12 bis 15, wobei die Einlassöffnung (11b) des äußeren Rohres (11) für das Einführen des ersten Stroms (ST1) eines Thermoplasten (A) innerhalb des Fließraumes (E) eine laterale Öffnung ist, die in der Wand des Rohres angeordnet ist.

17. Einrichtung nach Anspruch 16, weiter beinhaltend ein laterales Speiserohr (12), welches ein Y mit dem äußeren Speiserohr (11) bildet und geeignet ist, den ersten Strom (ST1) des Thermoplasten (A) durch Schwerkraft zu führen oder zu leiten, und zwar nach unten zu der lateralen Einlassöffnung (11b) des äußeren Rohres (11).

18. Einrichtung nach Anspruch 17, weiter beinhaltend ein Auslassrohr (15) für das Evakuieren von heißer Luft in eine Richtung nach außerhalb des lateralen Speiserohres (12).

19. Einrichtung nach einem der Ansprüche 12 bis 18, wobei das innere, gekühlte Rohr (10) ein Rohr (100) zum Schwerkraft-Transportieren des zweiten Stroms (ST2) des Thermoplasten (B) aufweist und mit einer Kühleinrichtung (101,102,103, 104,105) zum kontinuierlichen Kühlen des Rohres (100).

20. Einrichtung nach Anspruch 19, wobei die Kühleinrichtung (101,102,103,104,105) geeignet ist, ein Kühlungsfluid kontinuierlich in Kontakt oder mit Berührung zu der äußeren Oberfläche des Rohres (100) zu führen oder zirkulieren zu lassen.

21. Einrichtung nach einem der Ansprüche 12 bis 20, weiter beinhaltend eine Dosiereinheit (13) zum Dosieren des Thermoplasten (B) am Eingang oder Einlass der gekühlten, inneren Leitung (10).

22. Einrichtung nach einem der Ansprüche 12 bis 21, weiter beinhaltend ein Auslassrohr (14) zum Ablassen oder Evakuieren von Staub oder Staubmaterial nach außerhalb des äußeren Rohres (11).

23. Installation einer Vorrichtung (2) zum Bearbeiten von zumindest zwei Thermoplasten (A,B), wobei die Vorrichtung einen Einlass (20a) aufweist, der mit einer Einrichtung (1) nach einem der Ansprüche 12 bis 22 ausgestattet ist, zum Speisen der Vorrichtung über den Einlass und per Schwerkraft, gleichzeitig mit zumindest zwei Strömen (ST1, ST2) von Thermoplasten (A,B).

24. Installation nach Anspruch 23, wobei die Vorrichtung eine Schraube zum Mischen und bevorzugt zum Schmelzmischen der zumindest zwei Thermoplasten (A,B) aufweist.

25. Installation nach Anspruch 24, mit einer Spritzgussform (22) zum Herstellen eines spritzgeformten Plastikartikels oder von solchen Plastikstücken.

26. Verwendung der Installation nach einem der vorigen Ansprüche 23 bis 25, zum Herstellen von spritzgeformten Plastikstücken, speziell Vorformlingen (Preforms) aus einer Mischung aus zumindest zwei unterschiedlichen Thermoplasten (A,B).

27. Verwendung der Installation nach einem der Ansprüche 23 bis 25 zum Mischen und bevorzugt zum Schmelzmischen von zumindest zwei Thermoplasten (A,B).

28. Verwendung nach Anspruch 27, wobei der erste Thermoplast (A) ein Homo- oder Copolymer eines aromatischen Polyesters aufweist und das zweite Material (B) ein Homo- oder Copolymer eines Polyamids aufweist.

29. Verwendung nach Anspruch 27 oder 28, wobei der zweite Thermoplast (B) Polyamid-Pellets enthält, die mit einem Additiv beschichtet sind.

30. Verwendung nach Anspruch 29, wobei das Additiv ausgewählt ist aus der Gruppe: Kobalt-Stearat, Aluminium-Stearat, Calcium-Stearat, Zink-Stearat, MagnesiumStearat, Rhodium-Stearat, Mangan-Stearat, Kupfer-Stearat und Eisen-Stearat.

## Revendications

1. Procédé d'alimentation d'un appareil (2) avec au moins un premier flux (ST1) d'un premier matériau thermoplastique à l'état solide (A) et simultanément avec au moins un deuxième flux (ST2) d'un deuxième matériau thermoplastique à l'état solide (B), dans lequel la température de fusion (MTa) dudit premier matériau thermoplastique (A) est plus élevée que la température de fusion (MTb) dudit deuxième matériau thermoplastique (B), dans lequel l'appareil est alimenté par gravité via une entrée (20a) avec ledit premier flux (ST1) de matériau thermoplastique (A), **caractérisé en ce qu'**un tube d'alimentation (10) est utilisé pour alimenter simultanément l'appareil par gravité via la même entrée (20a) avec ledit deuxième flux (ST2) de matériau thermoplastique (B), et **en ce que** la température d'alimentation (Ta) du matériau thermoplastique (A) dudit premier flux (ST1) est plus basse que la température de fusion (MTa) dudit premier matériau thermoplastique (A), mais est plus élevée que la température de fusion (MTb) dudit deuxième matériau thermoplastique (B), et le tube d'alimentation (10) est refroidi de façon continue pour maintenir la température dudit deuxième matériau thermoplastique (B) dudit deuxième flux (ST2) à l'intérieur dudit tube (10) en dessous de la température de fusion (MTb) du deuxième matériau thermoplastique (B).

2. Procédé selon la revendication 1, dans lequel au moins une partie inférieure du tube d'alimentation refroidi (10) est positionnée à l'intérieur du premier flux (ST1) de premier matériau thermoplastique (A).

3. Procédé selon l'une quelconque des revendications 1 à 2, dans lequel le tube d'alimentation refroidi (10) est utilisé pour transporter ledit deuxième flux (ST2) de deuxième matériau thermoplastique (B) au-dessus et à proximité de l'entrée (20a) de l'appareil.

4. Procédé selon l'une quelconque des revendications 1 à 2, dans lequel le tube d'alimentation refroidi (10) est utilisé pour transporter ledit deuxième flux (ST2) de deuxième matériau thermoplastique (B) vers le bas jusqu'à l'entrée (20a) de l'appareil.

5. Procédé selon l'une quelconque des revendications 1 à 2, dans lequel le tube d'alimentation refroidi (10) est utilisé pour transporter ledit deuxième flux (ST2) de deuxième matériau thermoplastique (B) à l'intérieur de l'appareil (2), à travers ladite entrée (20a) de l'appareil.

6. Procédé selon l'une quelconque des revendications 1 à 5, dans lequel un tube d'alimentation extérieur (11) est utilisé pour transporter ledit premier flux (ST1) de premier matériau thermoplastique (A), dans lequel au moins une partie du premier tube d'alimentation refroidi (10) est positionnée à l'intérieur du tube d'alimentation extérieur (11), et dans lequel le premier flux (ST1) de premier matériau thermoplastique (A) est en écoulement à l'intérieur de l'espace (E) entre les deux tubes.

7. Procédé selon l'une quelconque des revendications 1 à 6, dans lequel l'appareil (2) comprend une vis pour le mélange, et de préférence le mélange en fusion, d'au moins deux matériaux thermoplastiques (A, B).

8. Procédé selon l'une quelconque des revendications 1 à 7, dans lequel le premier matériau thermoplastique (A) comprend un homo- ou copolymère de polyester aromatique, et le deuxième matériau thermoplastique (B) comprend un homo- ou copolymère de polyamide.

9. Procédé selon la revendication 8, dans lequel le deuxième matériau thermoplastique (B) comprend des granulés de polyamide revêtus d'un additif.

10. Procédé selon la revendication 9, dans lequel l'additif est sélectionné dans le groupe: stéarate de cobalt, stéarate d'aluminium, stéarate de calcium, stéarate de zinc, stéarate de magnésium, stéarate de rhodium, stéarate de manganèse, stéarate de cuivre, stéarate de fer.

11. Procédé selon l'une quelconque des revendications 1 à 10, dans lequel un matériau de poussière flottant à l'intérieur du tube extérieur (11) est de façon continue aspiré et évacué hors du tube extérieur.

12. Dispositif (1) pour l'alimentation d'un appareil par gravité avec au moins un premier flux (ST1) d'un premier matériau thermoplastique à l'état solide (A) et simultanément avec au moins un deuxième flux d'un deuxième matériau thermoplastique à l'état solide (B), la température de fusion (MTa) dudit premier matériau thermoplastique (A) étant plus élevée que la température de fusion(MTb) dudit deuxième matériau thermoplastique (B), **caractérisé en ce que** ledit dispositif (1) comprend un tube d'alimentation refroidi intérieur (10) et un tube d'alimentation extérieur (11), dans lequel au moins une partie inférieure (10a) dudit tube d'alimentation refroidi intérieur (10) est positionnée à l'intérieur du tube d'alimentation extérieur (11), avec un espace d'écoulement (E) entre les deux tubes (10, 11) pour permettre l'écoulement d'un flux (ST1) de matériau thermoplastique (A), dans lequel le tube d'alimentation extérieur (11) comporte une ouverture d'entrée (11b) pour l'introduction du premier flux (ST1) de matériau thermoplastique (A) à une première température d'alimentation (Ta) à l'intérieur dudit espace d'écoulement (E) et une ouverture de sortie inférieure pour décharger le premier flux (ST1) de matériau thermoplastique (A) à l'extérieur du tube extérieur, et dans lequel le tube d'alimentation refroidi intérieur (10) comporte une ouverture d'entrée (100a) pour l'introduction de l'autre flux (ST2) de matériau thermoplastique (B) à une deuxième température d'alimentation (Tb) à l'intérieur du tube refroidi intérieur (10) et une ouverture de sortie inférieure (10c) pour décharger le deuxième flux (ST2) de matériau thermoplastique (B) à l'extérieur du tube intérieur (10).

13. Dispositif selon la revendication 12, dans lequel l'ouverture de sortie inférieure (10c) du tube refroidi intérieur (10) est positionnée à l'intérieur du tube extérieur (11) et au-dessus de l'ouverture de sortie inférieure (11a) du tube extérieur (11).

14. Dispositif selon la revendication 12, dans lequel l'ouverture de sortie inférieure (10c) du tube refroidi intérieur (10) est positionnée au même niveau que l'ouverture de sortie inférieure (11a) du tube extérieur (11).

15. Dispositif selon la revendication 12, dans lequel l'ouverture de sortie inférieure (10c) du tube refroidi intérieur (10) est positionnée à l'extérieur du tube extérieur (11) et en dessous de l'ouverture de sortie inférieure (11a) du tube extérieur (11).

16. Dispositif selon l'une quelconque des revendications 12 à 15, dans lequel l'ouverture d'entrée (11b) du tube extérieur (11) pour l'introduction du premier flux (ST1) de matériau thermoplastique (A) à l'intérieur dudit espace d'écoulement (E) est une ouverture latérale pratiquée dans la paroi du tube.

17. Dispositif selon la revendication 16, comprenant en outre un tube d'alimentation latéral (12) formant un Y avec le tube d'alimentation extérieur (11) et convenant pour transporter par gravité le premier flux (ST1) de matériau thermoplastique (A) vers le bas jusqu'à l'ouverture d'entrée latérale (11b) du tube extérieur (11).

18. Dispositif selon la revendication 17, comprenant en outre un tube d'échappement (15) pour évacuer l'air chaud à l'extérieur du tube d'alimentation latéral (12).

19. Dispositif selon l'une quelconque des revendications 12 à 18, dans lequel le tube refroidi intérieur (10) comprend un tube (100) pour transporter par gravité le deuxième flux (ST2) de matériau thermoplastique (B) et des moyens de refroidissement (101, 102, 103, 104, 105) pour refroidir de façon continue ledit tube (100).

20. Dispositif selon la revendication 19, dans lequel les moyens de refroidissement (101, 102, 103, 104, 105) conviennent pour faire circuler de façon continue un fluide refroidi en contact avec la surface extérieure du tube (100).

21. Dispositif selon l'une quelconque des revendications 12 à 20, comprenant en outre une unité de dosage (13) pour doser le matériau thermoplastique (B) à l'entrée du tube intérieur refroidi (10).

22. Dispositif selon l'une quelconque des revendications 12 à 21, comprenant en outre un tube d'échappement (14) pour évacuer le matériau de poussière à l'extérieur du tube extérieur (11).

23. Installation comprenant un appareil (2) pour traiter au moins deux matériaux thermoplastiques (A, B), ledit appareil comportant une entrée (20a) qui est munie d'un dispositif (1) selon l'une quelconque des revendications 12 à 22 pour alimenter l'appareil via ladite entrée et par gravité simultanément avec au moins deux flux (ST1, ST2) de matériaux thermoplastiques (A, B).

24. Installation selon la revendication 23, dans laquelle l'appareil comprend une vis pour mélanger, et de préférence pour mélanger en fusion, lesdits au moins deux matériaux thermoplastiques (A, B).

25. Installation selon la revendication 24, comprenant en outre un moule d'injection (22) pour fabriquer des pièces en plastique moulées par injection.

26. Utilisation de l'installation selon l'une quelconque des revendications 23 à 25 pour la fabrication de pièces en plastique moulées par injection, et plus particulièrement de préformes, à partir d'un mélange composé au moins des deux matériaux thermoplastiques différents (A, B).

27. Utilisation de l'installation selon l'une quelconque des revendications 23 à 25 pour mélanger, et de préférence mélanger en fusion, au moins deux matériaux thermoplastiques (A, B)

28. Utilisation selon la revendication 27, dans laquelle le premier matériau thermoplastique (A) comprend un homo- ou copolymère de polyester aromatique, et le deuxième matériau thermoplastique (B) comprend un homo- ou copolymère de polyamide.

29. Utilisation selon la revendication 27 ou 28, dans laquelle le deuxième matériau thermoplastique (B) comprend des granulés de polyamide revêtus d'un additif.

30. Utilisation selon la revendication 29, dans laquelle l'additif est sélectionné dans le groupe: stéarate de cobalt, stéarate d'aluminium, stéarate de calcium, stéarate de zinc, stéarate de magnésium, stéarate de rhodium, stéarate de manganèse, stéarate de cuivre, stéarate de fer.
